# EUROPÄISCHE PATENTSCHRIFT

(11) **EP 3 178 627 B1**
(45) Veröffentlichungstag und Bekanntmachung des Hinweises auf die Patenterteilung: **05.12.2018**
(21) Anmeldenummer: 16202517.5
(22) Anmeldetag: 06.12.2016
(51) Int. Cl.: B29C 47/08, B29C 47/12, B29C 47/92, B05C 17/005, B05C 5/02, B29C 47/00

(54) **EXTRUSIONSVORRICHTUNG UND VERFAHREN ZUM AUFFÜLLEN EINER NUT MIT EINER FÜLLMASSE**
EXTRUSION DEVICE AND METHOD FOR FILLING A GROOVE WITH A FILLER MASS
DISPOSITIF ET PROCÉDÉ POUR REMPLIR UNE RAINURE AVEC UNE MATIÈRE DE REMPLISSAGE

(30) Priorität: 10.12.2015 DE 102015224834
(43) Veröffentlichungstag der Anmeldung: 14.06.2017
(73) Patentinhaber: Airbus Defence and Space GmbH, 82024 Taufkirchen (DE)
(72) Erfinder: Herrles, Christian, 85521 Riemerling (DE); Hallweger, Franz Xaver, 83626 Valley (DE); Fuhrmann, Jens, 89356 Haldenwang (DE); Meyer, Meinhard, München 81739 (DE)
(74) Vertreter: Isarpatent

(56) Entgegenhaltungen:
- EP-A1- 0 638 408
- EP-A1- 1 584 449
- EP-A2- 0 263 889
- EP-A2- 2 837 430
- WO-A1-2008/141871
- WO-A1-2016/140880
- DE-A1- 2 812 144
- GB-A- 713 184
- US-A- 5 010 841

## Beschreibung

Die vorliegende Erfindung betrifft eine Extrusionsvorrichtung und ein Verfahren zum Auffüllen einer Nut mit einer Füllmasse. Insbesondere befasst sich die vorliegende Erfindung mit der Extrusion von Füllmassen zum Auffüllen von Fügeübergängen, Fügenuten, Nuten und/oder ähnlichen zu füllenden bzw. glättenden Aussparungen in Strukturen, insbesondere in Strukturen von Luft- oder Raumfahrzeugen.

Obwohl in vielfältigen Anwendungen zur Füllung von Fügeübergängen bzw. Nuten unterschiedlichster Strukturen verwendbar, werden die vorliegende Erfindung sowie die ihr zugrunde liegende Problematik in Bezug auf die Füllmassenapplikation im Bereich von Flugzeugflügeln näher erläutert. Prinzipiell ist die vorliegende Erfindung jedoch auch zur Füllung von Fügeübergängen, Fügenuten bzw. Nuten in allgemeinen Fahrzeugen, wie Straßenfahrzeugen, Schienenfahrzeugen und/oder Wasserfahrzeugen oder dergleichen verwendbar.

Eine zentrale Herausforderung des modernen Flugzeugbaus ist die Gestaltung von effizienten Luftfahrzeugen, welche eine möglichst geringen Treibstoffverbrauch und damit verbundenen Schadstoffausstoß aufweisen. Zu diesem Zweck wird intensiv erforscht, wie verbesserte Flügel zu einem umweltschonenderen Flugverkehr beitragen können. So wird insbesondere der Strömungswiderstand eines Flugzeugs ganz entscheidend von dem spezifischen, geschwindigkeitsabhängigen Strömungsverlauf der Luft über den Oberflächen der Flugzeugtragflächen beeinflusst. Je gleichmäßiger diese Strömung verläuft, desto geringer ist der Widerstand. Ein geringer Luftwiderstand reduziert wiederum den Treibstoffverbrauch, die Emission von Schadstoffen und damit auch die Energiekosten. Ein verfolgter Ansatz besteht somit darin, Flügelkonstruktionen dahingehend zu optimieren, dass eine gleichmäßige, d.h. laminare, Strömung auf Dauer gehalten werden kann, ohne dass Turbulenzen auftreten, welche wieder zu einem erhöhten Luftwiderstand führen würden.

Zu diesem Zweck ist es vorteilhaft, die Oberflächen der Tragflächen und insbesondere die zur Flugrichtung gerichteten Flügelseiten so glatt wie möglich zu gestalten. Bereits kleinste Unebenheiten an den Oberflächen aufgrund von Schmutz, Montage- und/oder Lackierungsungenauigkeiten können einen laminare Strömung am Flügel beeinflussen. Ansätze für so genannte laminare Flügel weisen eine feste Flügelvorderkante auf, die fest mit einem Flügelkasten verbunden ist. Bei der Anbindung einer solchen Flügelvorderkante an den Flügelkasten entsteht ein Fügeübergang, der möglichst eben mit einer Füllmasse aufgefüllt werden sollte, um geeignete Voraussetzungen für das Halten einer laminaren Strömung zu erfüllen.

Typischerweise werden Fügeübergänge bzw. Fügenuten manuell mit Füllmasse gefüllt und im Anschluss manuell geglättet. Einer Applikation der Füllmasse kann hierzu eine Maskierung der an die Fügenut angrenzenden Flächen vorgelagert sein, um diese Flächen vor Verschmutzung durch die Füllmasse zu schützen. Eine präzise Aufbringung der Maskierung ist typischerweise zeitaufwändig, kann aber gleichzeitig entscheidend für die Qualität der anschließenden Füllung sein. Generell stellt es sich als schwierig heraus, die hohen Anforderungen an die Füllmassenoberfläche eines laminaren Flügels mit einem manuellen Füllprozess zu realisieren.

Insbesondere kann es zur Sicherstellung der geforderten Toleranzen mitunter notwendig sein, den Füllungs- und Glättungsprozess mehrfach hintereinander zu wiederholen.

Die Druckschrift EP 0 263 889 A2 beschreibt eine Vorrichtung zum Applizieren von Dichtmasse. Die Druckschrift WO 2008/141871 A1 beschreibt eine Vorrichtung zum Auftragen einer viskoelastischen Masse. Die Druckschrift WO 2016/140880 A1 beschreibt einen Extruder für 3D-Drucker.

Die Druckschrift EP 2 837 430 A2 offenbart ein System zur Applikation von hochviskosen Dichtmitteln.

Die Druckschrift US 5,010,841 A offenbart einen rotierenden Dichtmittelapplikator zum Aufbringen eines Dichtmittels entlang einer Senkung an einer Nietbohrung. Hierzu wird eine Applikatorspitze in die Nietbohrung eingebracht, wobei die Applikatorspitze seitlich auf der Senkung der Nietbohrung aufsetzt. Hierdurch wird eine Feder in das Innere des Applikators gedrückt, was wiederum eine Fluidverbindung zwischen der Applikatorspitze und einem Vorratsbehälter öffnet. Das Dichtmittel wird nun entlang der Senkung aus seitlich an der Applikatorspitze angeordneten Öffnungen mittels Rotation der Applikatorspitze aufgetragen.

Vor diesem Hintergrund liegt der vorliegenden Erfindung die Aufgabe zugrunde, einfache Lösungen für das Verfüllen von Füllmassen zu finden, welche eine schnelle und dennoch präzise Auffüllung von Nuten ermöglichen.

Erfindungsgemäß wird diese Aufgabe gelöst durch eine Extrusionsvorrichtung mit den Merkmalen des Patentanspruchs 1 und durch ein Verfahren mit den Merkmalen des Patentanspruchs 10.

Demgemäß ist eine Extrusionsvorrichtung zum Auffüllen einer Nut mit einer Füllmasse vorgesehen. Die Extrusionsvorrichtung umfasst einen Extrusionskopf, welcher federelastisch in eine Extrusionsrichtung der Extrusionsvorrichtung zum Aus- und Einfedern in die Extrusionsrichtung einem Tiefenprofil der Nut folgend beim Entlangfahren des Extrusionskopfs an der Nut ausgebildet ist. Erfindungsgemäß weist der Extrusionskopf zwei ineinandergesteckte, gegeneinander gleitfähige Zylinderelemente auf, zwischen denen eine Zylinderfeder angeordnet ist, wobei die zwei Zylinderelemente zum Durchleiten der Füllmasse hohl ausgebildet sind.

Darüber hinaus ist ein Verfahren zum Auffüllen einer Nut mit einer Füllmasse mittels einer erfindungsgemäßen Extrusionsvorrichtung vorgesehen. Das Verfahren umfasst Entlangfahren eines Extrusionskopfs an der Nut. Das Verfahren umfasst ferner Extrudieren der Füllmasse aus dem Extrusionskopf in die Nut. Der Extrusionskopf federt einem Tiefenprofil der Nut folgend in eine Extrusionsrichtung federelastisch ein und aus.

Ferner ist eine Verwendung einer erfindungsgemäßen Extrusionsvorrichtung und/oder einem erfindungsgemäßen Verfahren zum Auffüllen einer Nut in einer Flügelstruktur und/oder zwischen Flügelstrukturen eines Luft- oder Raumfahrzeugs vorgesehen.

Die der vorliegenden Erfindung zugrunde liegende Idee besteht darin, einen speziellen elastischen, insbesondere federelastischen, Extrusionskopf zu schaffen, welcher jederzeit einen möglichst geringen Abstand zwischen einem Extrusionsauslass, z.B. einer Extrusionsdüse, und einer Applikationsfläche gewährleistet. Der Abstand zwischen der Düsenaustrittsseite und der Applikationsfläche wird gewissermaßen automatisch aufgrund der federelastischen Wirkung des Extrusionskopfs auf einem geeigneten minimalen Abstand gehalten. So muss beispielsweise eine robotergeführte oder eine manuell geführte Vorrichtung nicht mehr exakt einen vordefinierten Abstand zwischen Düsenunterseite und Nutoberseite einhalten, da dies automatisch in einem gewissen Bereich bzw. Umfang durch die erfindungsgemäße Extrusionsvorrichtung ausgeglichen werden kann, sobald mindestens ein Teil der Düse und/oder Extrusionsvorrichtung einen Kontakt zum Bauteil aufweist. Die erfindungsgemäße Extrusionsvorrichtung dient demnach einerseits als Automatisierungshilfe und andererseits als Höhenkompensation. Die Extrusionsvorrichtung kann sowohl robotergeführt als auch manuell ausgebildet sein. Die erfindungsgemäße Extrusionsvorrichtung ermöglicht eine schnelle und dennoch präzise Auffüllung von Fügeübergängen, Fügenuten und/oder Nuten.

Um ein gutes Füllergebnis zu erzielen, kann es mitunter wichtig sein, eine Extrusionsdüse möglichst nahe im Bereich von Bruchteilen von Millimetern an der Nut-Oberfläche entlangzuführen, z.B. mit einem Roboter. Aufgrund von Fertigungstoleranzen weisen die Flächen entlang einer Nut jedoch gewisse Abweichungen von der gewünschten Idealform auf, so dass im Falle von konventionellen Verfahren für eine möglichst nahe Führung ein signifikanter Regel- bzw. Programmieraufwand betrieben werden muss, um die Trajektorie des Roboters für die Führung der Düse ausreichend genau zu bestimmen und entsprechend zu steuern. Hinzu kommt die inhärente Ungenauigkeit des verwendeten Roboters, welche eine weitere Streuung der Zielgenauigkeit in der Größenordnung von Zehntelmillimetern bewirkt. Die erfindungsgemäße Lösung umgeht diese Problematik, indem der Abstand zwischen der Düsenaustrittsseite und der Applikationsfläche automatisch eingehalten wird, ohne dass dieser mit einer aufwändigen Steuerung geregelt werden muss.

Ein federelastischer Extrusionskopf bezeichnet in der vorliegenden Erfindung einen elastisch rückstellenden Extrusionskopf, d.h. einen Extrusionskopf, der unter Belastung nachgibt und nach Entlastung selbstständig in die ursprüngliche Konfiguration zurückkehrt. Ein solches Verhalten kann beispielsweise über eine oder mehrere Federn realisiert werden. Die entsprechende Federkonstante bzw. die Rückstellkraft kann hierbei je nach konkreten Anwendungsfall unterschiedlich konfiguriert sein, so dass der Extrusionskopf entsprechend leicht oder weniger leicht ein- bzw ausfedert. Prinzipiell können hierbei jedoch auch andere dem Fachmann naheliegende Federungs- und/oder Dämpfungsystem zum Einsatz kommen. Beispielsweise kann der Extrusionskopf alternativ zu einer mechanischen Feder mit einer pneumatischen und/oder hydraulischen Federung bzw. Dämpfung ausgebildet sein.

Füllmassen im Sinne der Erfindung umfassen unter anderem auch Kleber, Ausgleichsmassen (Shim-Massen), Anstrichmittel, Lacke bzw. Füllerschichten oder ähnliche Materialien, wie mit Metall- und oder Keramikpartikeln gefüllte Füllmassen. Nuten im Sinne der Erfindung umfassen unter anderem Fügeübergänge, Fügenuten und/oder ähnliche zu füllende bzw. glättende Aussparungen.

Vorteilhafte Ausgestaltungen und Weiterbildungen ergeben sich aus den weiteren Unteransprüchen sowie aus der Beschreibung unter Bezugnahme auf die Figuren.

Gemäß der Erfindung weist der Extrusionskopf zwei ineinandergesteckte, gegeneinander gleitfähige Zylinderelemente aufweisen, zwischen denen eine Zylinderfeder angeordnet ist. Der Extrusionskopf ist demnach mit einer Federung ausgebildet, in welcher zwei Zylinderelemente relativ zueinander bewegbar sind und über eine Feder elastisch nachgebend aneinander gekoppelt sind. Beispielsweise kann hierzu die Zylinderfeder auf einen Gleitfortsatz des einen Zylinderelements aufgesteckt werden, woraufhin das andere entsprechend komplementär ausgebildete Zylinderelement ebenfalls auf den Gleitfortsatz gesteckt werden kann, so dass die beiden Zylinderelement gegeneinander in gedämpfter Weise gleiten können.

Gemäß der Erfindung sind die zwei Zylinderelemente zum Durchleiten der Füllmasse hohl ausgebildet. Die Extrusionsvorrichtung ist somit besonders einfach und robust gestaltet, indem eine Federung aus zwei Zylinderelementen und einer Zylinderfeder gleichzeitig gewissermaßen als Zufuhrrohr oder Zufuhrröhre für die Weiterleitung der Füllmasse dient.

Gemäß einer Weiterbildung kann der Extrusionskopf ein Gehäuse aufweisen. Aus dem Gehäuse können die zwei Zylinderelemente jeweils mit einem Verbindungsende herausragen. Ein erstes Zylinderelement der zwei Zylinderelemente kann fest mit dem Gehäuse verbunden sein. Ein zweites Zylinderelement der zwei Zylinderelemente kann kolbenartig gleitfähig in dem Gehäuse gelagert sein. Die Verbindungsenden können hierbei beispielsweise dazu genutzt werden, um den Extrusionskopf mit weiteren Elemente der Extrusionsvorrichtung zu verbinden. Beispielsweise kann eines der Verbindungsenden oder beide Verbindungsenden mit einem Innen- und/oder Außengewinde ausgebildet sein. Entsprechend weitere Elemente der Extrusionsvorrichtung können dann hierzu komplementär geformte Gegengewinde aufweisen, über welche die weiteren Elemente mit dem Extrusionskopf zusammenschraubbar sind.

Gemäß einer Weiterbildung können die zwei Zylinderelemente und/oder das Gehäuse zumindest oberflächlich im Wesentlichen Polytetrafluorethylen (PTFE) enthalten und/oder mit PTFE beschichtet sein. Prinzipiell können die zwei Zylinderelemente und/oder das Gehäuse auch überwiegend oder vollständig aus PTFE bestehen. PTFE eignet sich besonders gut als Oberflächenmaterial für diese Elemente, da PTFE eine Reinigung besonders einfach und effizient gestaltet. Sollten Elemente nach oder während der Anwendung mit Füllmasse verunreinigt werden, so kann sich diese nach dem Aushärten leicht entfernen lassen. Grundsätzlich wird dem Fachmann jedoch ersichtlich sein, dass alternativ oder zusätzlich auch andere Materialien, insbesondere selbsttrennende Materialien, verwendet werden können, welche eine ähnliche komfortable und/oder rückstandslose Reinigung ermöglichen. In dieser Weiterbildung ist die Extrusionsvorrichtung folglich leicht zu reinigen und somit grundsätzlich wiederverwendbar.

Gemäß einer Weiterbildung kann die Extrusionsvorrichtung eine Extrusionsdüse umfassen. Die Extrusionsdüse kann dazu ausgebildet sein, die Füllmasse aus dem Extrusionskopf zu extrudieren. Die Extrusionsdüse dient hierbei als formgebende Öffnung, um flüssige bzw. fließfähige aushärtbare Füllmassen unter Druck kontinuierlich auszupressen. Grundsätzlich kann jedoch alternativ auch vorgesehen sein, dass die Extrusionsvorrichtung keine spezielle Extrusionsdüse umfasst, sondern dass beispielsweise der Extrusionskopf mit einer geeigneten Austrittsöffnung ausgebildet ist.

Gemäß einer Weiterbildung kann die Extrusionsdüse aus einem Kunststoff gebildet sein. Jedoch kann die Extrusionsdüse auch aus einem Metall, Kunststoff und/oder Keramikverbund und/oder einer Kombination aus diesen Materialien (z.B. einem Metall-Kunststoff-Verbund) gebildet sein. Beispielsweise kann die Extrusionsdüse mit einem generativen bzw. additivien Fertigungsverfahren, d.h. einem "3D-Druckverfahren", hergestellt werden. Hierzu kann beispielsweise ein Fused-Deposition-Modeling (FDM) Verfahren oder ein entsprechendes bekanntes additives Verfahren verwendet werden, bei welchem ein Objekt schichtweise aus einem schmelzfähigem Kunststoff und/oder Metall aufgebaut wird. Generell wird in 3D-Druckverfahren ausgehend von einem digitalisierten geometrischen Modell eines Objekts ein Ausgangsmaterial sequentiell in Lagen übereinandergeschichtet und ausgehärtet. 3D-Druckverfahren sind derzeit weit verbreitet in der industriellen Produktentwicklung, in der eine ressourceneffiziente Prozesskette zur bedarfsgerechten Klein- und Großserienfertigung individualisierter Bauteile eingesetzt wird.

Gemäß einer Weiterbildung kann der Extrusionskopf mit einem ersten Gewinde und die Extrusionsdüse mit einem komplementär geformten ersten Gegengewinde ausgebildet sein, so dass die Extrusionsdüse auf den Extrusionskopf auf- und von dem Extrusionskopf abschraubbar ist. Prinzipiell sind hierbei auch andere dem Fachmann bekannte Verbindungstechniken vorgesehen. Beispielsweise kann eine Steckverbindung zwischen dem Extrusionskopf und der Extrusionsdüse geschaffen werden. Hierzu kann der Extrusionskopf mit einem ersten Steckabschnitt, einem ersten Rastabschnitt oder allgemein einem ersten Verbindungsabschnitt ausgebildet sein und die Extrusionsdüse kann entsprechend mit einem komplementär geformten ersten Gegensteckabschnitt, einem ersten Gegenrastabschnitt oder allgemein einem ersten Gegenverbindungsabschnitt ausgebildet sein.

Gemäß einer Weiterbildung kann die Extrusionsvorrichtung ein Materialmagazin umfassen, welches zur Aufnahme der Füllmasse ausgebildet ist. Das Materialmagazin kann derart mit dem Extrusionskopf verbunden sein, dass die Füllmasse durch Druckbeaufschlagung aus dem Materialmagazin in den Extrusionskopf einleitbar ist. In einer besonders einfachen Weiterbildung kann das Materialmagazin beispielsweise als eine Kartusche aus Kunststoff ausgebildet sein, welche mit einer Füllmasse gefüllt ist bzw. mit der Füllmasse auffüllbar ist. Alternativ kann das Materialmagazin jedoch auch anders ausgestaltet sein, z.B. kann die Füllmasse aus Bottichen mittels Schläuchen dem Extrusionskopf bzw. der Extrusionsvorrichtung zugeführt werden. Grundsätzlich werden sich dem Fachmann auch weitere geeignete Materialzuführungen aus dem Zusammenhang erschließen (z.B. aus der automatisierten Lackiertechnik bekannte Zuführungsvarianten).

Gemäß einer Weiterbildung kann der Extrusionskopf mit einem zweiten Gewinde und das Materialmagazin mit einem komplementär geformten zweiten Gegengewinde ausgebildet sein, so dass der Extrusionskopf auf das Materialmagazin auf- und von dem Materialmagazin abschraubbar ist. Prinzipiell sind hierbei auch andere dem Fachmann bekannte Verbindungstechniken vorgesehen. Beispielsweise kann eine Steckverbindung zwischen dem Extrusionskopf und dem Materialmagazin geschaffen werden. Hierzu kann der Extrusionskopf mit einem zweiten Steckabschnitt, einem zweiten Rastabschnitt oder allgemein einem zweiten Verbindungsabschnitt ausgebildet sein und das Materialmagazin kann entsprechend mit einem komplementär geformten zweiten Gegensteckabschnitt, einem zweiten Gegenrastabschnitt oder allgemein einem zweiten Gegenverbindungsabschnitt ausgebildet sein.

Gemäß einer Weiterbildung kann die Extrusionsvorrichtung einen Roboter umfassen, welcher dazu ausgebildet ist, den Extrusionskopf entlang der Nut zu bewegen und die Nut dabei mit der Füllmasse durch Extrusion der Füllmasse aus dem Extrusionskopf aufzufüllen. Entsprechend kann in einer Weiterbildung des Verfahrens das Entlangfahren des Extrusionskopfs an der Nut von einem Roboter gesteuert werden. In dieser Weiterbildung kann die Extrusionsvorrichtung demnach vollautomatisch betrieben werden, indem ein entsprechend programmierter Roboter sämtliche oder beinahe sämtliche Arbeitsschritte übernimmt. Einem Benutzer kann es somit beispielsweise lediglich vorbehalten sein, das Materialmagazin gegebenenfalls mit Füllmasse aufzufüllen bzw. dieses mit einem gefüllten Materialmagazin auszutauschen.

Die obigen Ausgestaltungen und Weiterbildungen lassen sich, sofern sinnvoll, beliebig miteinander kombinieren.

Die vorliegende Erfindung wird nachfolgend anhand der in den schematischen Figuren angegebenen Ausführungsbeispiele näher erläutert. Es zeigen dabei:
- Fig. 1: schematische Ansichten von Einzelteilen eines Extrusionskopfs einer erfindungsgemäßen Extrusionsvorrichtung zum Auffüllen einer Nut eines Luft- oder Raumfahrzeugs mit einer Füllmasse gemäß einer Ausführungsform der Erfindung;
- Fig. 2a,2b,2c: exemplarische Ansichten von einzelnen Stationen des Zusammenbaus einer Extrusionsvorrichtung und dem Extrusionskopf aus Fig. 1;
- Fig. 3: ein schematisches Ablaufdiagramm eines erfindungsgemäßen Verfahrens zum Auffüllen einer Nut eines Luft- oder Raumfahrzeugs mit einer Füllmasse gemäß einer Ausführungsform der Erfindung; und
- Fig. 4: eine schematische Perspektivansicht der Verwendung der Extrusionsvorrichtung aus Fig. 2 in dem Verfahren aus Fig. 3.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

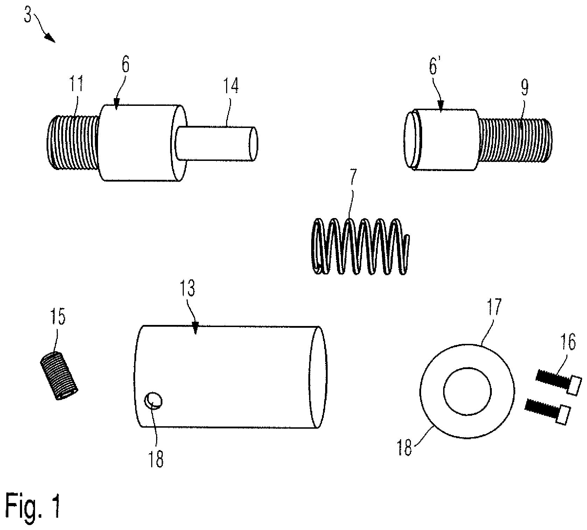

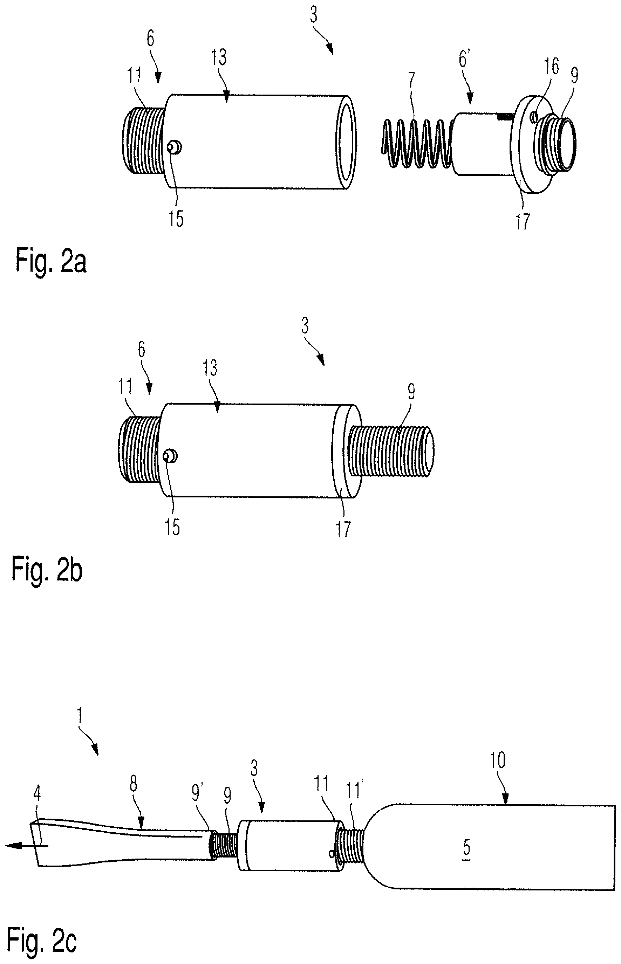

Fig. 1 zeigt schematische Ansichten von Einzelteilen eines Extrusionskopfs einer erfindungsgemäßen Extrusionsvorrichtung zum Auffüllen einer Nut eines Luft- oder Raumfahrzeugs mit einer Füllmasse gemäß einer Ausführungsform der Erfindung. Fig. 2a bis 2c zeigen exemplarische Ansichten von einzelnen Stationen des Zusammenbaus einer Extrusionsvorrichtung mit dem Extrusionskopf aus Fig. 1.

In Fig. 1 bezeichnet das Bezugszeichen 3 den Extrusionskopf. Der Extrusionskopf 3 ist in Fig. 1 in seine Einzelteile zerlegt dargestellt. Grundlegend umfasst der Extrusionskopf 3 ein erstes Zylinderelement 6, ein zweites Zylinderelement 6', eine Zylinderfeder 7 und ein Gehäuse 13. Zur Befestigung dieser Komponenten aneinander sind in dieser beispielhaften Ausführungsform weiterhin eine Madenschraube 15, mehrere Schrauben 16 sowie eine Feststellscheibe 17 vorgesehen. Das Gehäuse 13 umfasst ein Schraubengewinde 18 für das Aufnehmen der Madenschraube 15 und die Feststellscheibe 17 weist entsprechende Schraubengewinde 18 für die Schrauben 16 auf.

Sowohl die zwei Zylinderelemente 6, 6' als auch das Gehäuse 13 sind in der Ausführungsform in Fig. 1 aus Polytetrafluorethylen (PTFE) gefertigt. Alternativ können diese jedoch auch lediglich oberflächlich aus PTFE bestehen bzw. mit PTFE beschichtet sein. Beispielsweise kann es sich hierbei um Kunststoffbauteile handeln, welche lediglich mit PTFE beschichtet sind. Auch die Feststellscheibe 17 kann aus PTFE und/oder einem Kunststoff gefertigt sein. Prinzipiell sind darüber hinaus alternativ oder zusätzlich auch andere Materialien vorgesehen, welche eine gute und rückstandslose Reinigung einer Füllmasse 5 ermöglichen. Die Zylinderfeder 7 und die Schrauben 15, 16 können wiederum aus Metall bzw. aus einer Metalllegierung oder dergleichen bestehen.

Die zwei Zylinderelemente 6, 6' sind hohl ausgebildet und derart geformt, dass diese ineinander steckbar sind, so dass sie gegeneinander gleiten können, d.h. die zwei Zylinderelemente 6, 6' bilden zusammen eine Art Schub- oder Drehschubgelenk. Das erste Zylinderelement 6 ist in dieser beispielhaften Ausführung mit einem Gleitfortsatz 14 versehen, auf welchen sowohl die Zylinderfeder 7 als auch das zweite Zylinderelement 6' gesteckt werden können. Das erste Zylinderelement 6 ist ferner an einem Verbindungsende mit einem Gewinde 11 ausgebildet, welches in Bezug auf Fig. 2a bis 2c näher erläutert werden wird. Ebenfalls ist das zweite Zylinderelement 6' an einem Verbindungsende mit einem Gewinde 9 ausgebildet (siehe Fig. 2a bis 2c).

Dem Fachmann wird sich aus dem Zusammenhang erschließen, dass alternative Ausführungsformen von der Erfindung umfasst werden, die den gleichen Zweck erfüllen. Beispielsweise können mehr als zwei Zylinderelemente vorsehen sein. Insbesondere kann der Extrusionskopf 3 nach dem Prinzip einer Teleskopverbindung bzw. Teleskopstange aufgebaut sein, mit zwei oder mehr parallel in sich geführten Röhren oder Zylinderabschnitten, welche linear bis zu einem Anschlag auf eine maximale Ausfahrlänge herausbewegt und wieder ineinander zurückgefahren werden können. Dementsprechend kann zu diesem Zweck mehr als eine Zylinderfeder vorgesehen sein. Prinzipiell umfasst die Erfindung darüber hinaus auch andere, dem Fachmann geläufige Federungsmittel. Beispielsweise kann der Extrusionskopf 3 alternativ zu einer mechanischen Feder mit einer pneumatischen und/oder hydraulischen Federung ausgebildet sein, beispielsweise ebenfalls auf Basis mehrerer parallel geführter Zylinderelemente im Sinne eines Schub- oder Drehschubgelenks. Das Gehäuse 13 ist in der beispielhaften Ausführung in Fig. 1 ebenfalls als Hohlzylinder ausgebildet, welcher derart konfiguriert ist, dass beide Zylinderelemente 6, 6' in ineinandergesteckter Form darin Platz finden (vgl. Fig. 2a bis 2c). Die zwei Zylinderelemente 6, 6' bilden im Zusammenspiel mit dem Gehäuse 13 eine Art von Kolbensystem bzw. Federung im Sinne eines Schubgelenks, in welchem das zweite Zylinderelement 6' federelastisch in das Gehäuse 13 eingefedert und aus dem Gehäuse 13 ausgefedert werden kann. Die Zylinderfeder 7 stellt hierzu eine Rückstellkraft bereit. Der genaue Aufbau der Extrusionsvorrichtung 1 wird im Folgenden in Bezug auf Fig. 2a bis 2c veranschaulicht.

Fig. 2a bis 2c zeigen exemplarische Ansichten von einzelnen Stationen des Zusammenbaus einer Extrusionsvorrichtung 1 und dem Extrusionskopf 3 aus Fig. 1.

Fig. 2a zeigt den Extrusionskopf 3 aus Fig. 1, nachdem er teilweise zusammengebaut wurde. Links in Fig. 2a ist das erste Zylinderelement 6 bereits in das Gehäuse 13 eingeführt worden und dort mit der Madenschraube 15 befestigt worden. Hierzu ist die Madenschraube 15 in das Schraubengewinde 18 des Gehäuses eingeführt worden, so dass die Madenschraube 15 gegen das erste Zylinderelement 6 im Innern des Gehäuses 13 drückt und dieses dadurch in der Position fixiert. Ferner ist rechts in Fig. 2a die Zylinderfeder 7 bereits auf das zweite Zylinderelement 6' gesteckt worden. Ebenfalls wurden die Schrauben 16 in die Schraubengewinde 18 der Feststellscheibe 17 eingeführt und gemeinsam mit dieser auf das zweite Zylinderelement 6' aufgesteckt.

In Fig. 2b wurden die beiden Komponenten aus Fig. 2a zusammengesteckt und miteinander verschraubt. Hierzu wurde das zweite Zylinderelement 6' in das Gehäuse 13 eingeführt und dort auf das erste Zylinderelement 6 aufgesteckt. Im Anschluss wurden die Schrauben der Feststellscheibe 17 an dem Gehäuse 13 festgezogen. Im Ergebnis ergibt sich ein Extrusionskopf 3 mit einem zylinderförmigen Gehäuse 13, aus welchem die zwei Zylinderelemente 6, 6' jeweils mit einem Verbindungsende herausragen. Das erstes Zylinderelement 6 ist fest mit dem Gehäuse 13 verbunden, während das zweite Zylinderelement 6' kolbenartig gleitfähig in dem Gehäuse 13 gelagert ist. Die jeweils herausragenden Verbindungsenden der zwei Zylinderelement 6, 6' sind als Gewinde 9, 11 ausgeführt, um den Extrusionskopf 3 mit weiteren Elementen der Extrusionsvorrichtung 1 zu verbinden.

Fig. 2c zeigt hierzu den zusammengebauten Extrusionskopf 3 aus Fig. 2b, auf welchen nun auf einer Seite eine Extrusionsdüse 8 und auf der anderen Seite ein Materialmagazin 10 aufgeschraubt wurden. Hierzu weist die Extrusionsdüse 8 ein erstes Gegengewinde 11' auf, welches komplementär zu dem ersten Gewinde 9 des zweiten Zylinderelements 6 ausgebildet. Entsprechend weist das Materialmagazin 10 ein zweites Gegengewinde 11' auf, welches komplementär zu dem zweiten Gewinde 11 des ersten Zylinderelements 6' ausgebildet.

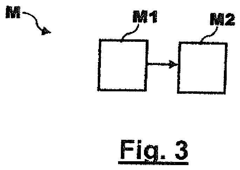

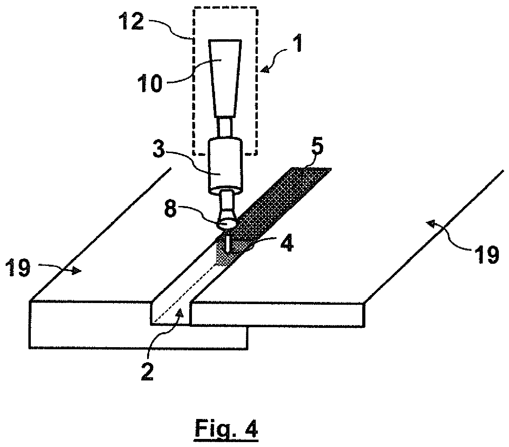

Das Materialmagazin 10 ist zur Aufnahme von Füllmasse 5 ausgebildet. Hierbei ist das Materialmagazin 10 derart mit dem Extrusionskopf 3 verbunden, dass die Füllmasse 5 durch Druckbeaufschlagung aus dem Materialmagazin 10 in den Extrusionskopf 3 einleitbar ist. Aufgrund der Druckbeaufschlagung wird die Füllmasse 5 durch die zwei hohlen Zylinderelement 6, 6' des Extrusionskopfs 3 hindurch in die Extrusionsdüse 8 eingeleitet. Die Extrusionsdüse 8 wiederum ist dazu ausgebildet, die Füllmasse 5 aus dem Extrusionskopf 3 in eine Extrusionsrichtung 4 zu extrudieren, so dass die Füllmasse in eine Nut 2 oder dergleichen (vgl. Fig. 4) ausgelassen werden kann. Der Extrusionskopf 3 ist hierbei federelastisch in die Extrusionsrichtung 4 der Extrusionsvorrichtung 1 zum Aus- und Einfedern in die Extrusionsrichtung 4 ausgebildet. Die Verwendung einer derart gebildeten Extrusionsvorrichtung 1 wird in Bezug auf Fig. 3 und 4 näher erläutert werden.

Fig 3. zeigt ein schematisches Ablaufdiagramm eines erfindungsgemäßen Verfahrens M zum Auffüllen einer Nut 2 eines Luft- oder Raumfahrzeugs mit einer Füllmasse 5 gemäß einer Ausführungsform der Erfindung.

Das Verfahren M umfasst unter M1 Entlangfahren eines Extrusionskopfs 3 an der Nut 2. Das Entlangfahren des Extrusionskopfs 3 an der Nut 2 kann hierbei beispielsweise von einem Roboter 12 gesteuert werden. Ferner umfasst das Verfahren M unter M2 Extrudieren der Füllmasse 5 aus dem Extrusionskopf 3 in die Nut 2. Der Extrusionskopf 3 federt einem Tiefenprofil der Nut 2 folgend in die Extrusionsrichtung 4 federelastisch ein- oder aus. Der Roboter 12 ist demnach dazu ausgebildet, den Extrusionskopf 3 entlang der Nut 2 zu bewegen und die Nut 2 dabei mit der Füllmasse 5 durch Extrusion der Füllmasse 5 aus dem Extrusionskopf 3 aufzufüllen.

Fig. 4 zeigt eine schematische Perspektivansicht der Verwendung der Extrusionsvorrichtung 1 aus Fig. 1 in dem Verfahren M aus Fig. 3.

Fig. 4 zeigt einen Fügeübergang bzw. eine Nut 2 zwischen zwei Flügelstrukturen 19 eines Luft- oder Raumfahrzeugs. Beispielsweise kann es sich bei den Flügelstrukturen um Komponenten eines laminaren Flugzeugflügels handeln, wobei eine Flügelstruktur 19 beispielsweise eine feste Flügelvorderkante sein kann, welche fest mit einer zweiten Flügelstruktur 19, z.B. einem Flügelkasten, verbunden ist. Bei der Anbindung einer solchen Flügelvorderkante an den Flügelkasten entsteht eine Nut 2, wie sie schematisch in Fig. 4 abgebildet ist. Um geeignete Voraussetzungen für das Halten einer laminaren Strömung zu erfüllen, sollte eine solche Nut 2 möglichst präzise mit einer Füllmasse 5 aufgefüllt werden. Gleichzeitig sollte die Verfüllung solcher Nuten 2 schnell und kosteneffizient in automatisierter Weise ausgeführt werden. Die Verwendung der Extrusionsvorrichtung 1 in dem Verfahren M gemäß der in Fig. 1 bis 3 dargestellten Ausführungsformen ermöglicht nun eine schnelle und dennoch präzise Auffüllung solche Nuten 2. Hierzu federt der Extrusionskopf 3 samt der daran befestigten Extrusionsdüse 8 einem Tiefenprofil der Nut 2 folgend in die Extrusionsrichtung 4 federelastisch ein und aus. Der Abstand zwischen der Extrusionsdüse 8 und der Nut 2 wird folglich automatisch aufgrund der federelastischen Wirkung des Extrusionskopfs 3 auf einem geeigneten minimalen Abstand gehalten, sofern die Extrusionsdüse 8 an die Nut 2 angelegt wird. So muss der Roboter 12 anders als in herkömmlichen Verfahren nicht mehr exakt einen vordefinierten Abstand zwischen Extrusionsdüse 8 und Nut 2 einhalten, da dies automatisch durch den erfindungsgemäßen Extrusionskopf 3 ausgeglichen wird.

In Fig. 4 ist eine senkrechte Applikation der Extrusionsvorrichtung 1 über der Nut 2 zwischen den zwei Flügelstrukturen 19 dargestellt. Grundsätzlich kann die Extrusionsvorrichtung 1 jedoch auch ebenso unter einem Winkel kleiner als 90° bezüglich der Ebene der Flügelstrukturen 19 an der Nut 2 entlanggefahren werden, d.h. entlang einer Nutachsenrichtung. Beispielsweise kann vorgesehen sein, die Extrusionsvorrichtung 1 und insbesondere den Extrusionskopf 3 unter einem Winkel zwischen 45° und 90° bezüglich der Horizontalen an der Nut 2 entlangzufahren. Prinzipiell ist allgemein eine Ausrichtung der Extrusionsvorrichtung 1 mit einem Neigungswinkel entsprechend einer Kegeloberfläche möglich.

Prinzipiell ist die vorliegende Erfindung darüber hinaus auch zur Füllung von Fügeübergängen bzw. Nuten in allgemeinen Fahrzeugen, wie Straßenfahrzeugen, Schienenfahrzeugen und/oder Wasserfahrzeugen oder dergleichen, bzw. allgemein im Transportsektor verwendbar. Über die Transportindustrie hinaus kann die Erfindung jedoch grundsätzlich auch in allen anderen technischen Gebieten genutzt werden, in denen ein Bedarf nach einer besonders präzisen Klebung und/oder Abdichtung besteht.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Extrusionsvorrichtung
- 2: Nut
- 3: Extrusionskopf
- 4: Extrusionsrichtung
- 5: Füllmasse
- 6, 6': Zylinderelement
- 7: Zylinderfeder
- 8: Extrusionsdüse
- 9: erstes Gewinde
- 9': erstes Gegengewinde
- 10: Materialmagazin
- 11: zweites Gewinde
- 11': zweites Gegengewinde
- 12: Roboter
- 13: Gehäuse
- 14: Gleitfortsatz
- 15: Madenschraube
- 16: Schraube
- 17: Feststellscheibe
- 18: Schraubengewinde
- 19: Flügelstruktur
- M: Verfahren
- M1: Verfahrensschritt
- M2: Verfahrensschritt

## Patentansprüche

1. Extrusionsvorrichtung (1) zum Auffüllen einer Nut (2) mit einer Füllmasse (5), mit:
einem Extrusionskopf (3), welcher federelastisch in eine Extrusionsrichtung (4) der Extrusionsvorrichtung (1) zum Aus- und Einfedern in die Extrusionsrichtung (4) einem Tiefenprofil der Nut (2) folgend beim Entlangfahren des Extrusionskopfs (3) an der Nut (2) ausgebildet ist, wobei der Extrusionskopf (3) zwei ineinandergesteckte, gegeneinander gleitfähige Zylinderelemente (6, 6') aufweist, zwischen denen eine Zylinderfeder (7) angeordnet ist, wobei die zwei Zylinderelemente (6, 6') zum Durchleiten der Füllmasse (5) hohl ausgebildet sind.

2. Extrusionsvorrichtung (1) nach Anspruch 1, wobei der Extrusionskopf (3) ein Gehäuse (13) aufweist, aus welchem die zwei Zylinderelemente (6, 6') jeweils mit einem Verbindungsende herausragen, wobei ein erstes Zylinderelement (6) der zwei Zylinderelemente (6, 6') fest mit dem Gehäuse (13) verbunden ist und ein zweites Zylinderelement (6') der zwei Zylinderelemente (6, 6') kolbenartig gleitfähig in dem Gehäuse (13) gelagert ist.

3. Extrusionsvorrichtung (1) nach Anspruch 1 oder 2, wobei die zwei Zylinderelemente (6, 6') und/oder das Gehäuse (13) zumindest oberflächlich Polytetrafluorethylen, PTFE, enthalten und/oder mit PTFE beschichtet sind.

4. Extrusionsvorrichtung (1) nach einem der vorstehenden Ansprüche, weiterhin mit:
einer Extrusionsdüse (8), welche dazu ausgebildet ist, die Füllmasse (5) aus dem Extrusionskopf (3) zu extrudieren.

5. Extrusionsvorrichtung (1) nach Anspruch 4, wobei die Extrusionsdüse (8) aus einem Kunststoff gebildet ist.

6. Extrusionsvorrichtung (1) nach Anspruch 4 oder 5, wobei der Extrusionskopf (3) mit einem ersten Gewinde (9) und die Extrusionsdüse (8) mit einem komplementär geformten ersten Gegengewinde (9') ausgebildet ist, so dass die Extrusionsdüse (8) auf den Extrusionskopf (3) auf- und von dem Extrusionskopf (3) abschraubbar ist.

7. Extrusionsvorrichtung (1) nach einem der vorstehenden Ansprüche, weiterhin mit:
einem Materialmagazin (10), welches zur Aufnahme der Füllmasse (5) ausgebildet ist und derart mit dem Extrusionskopf (3) verbunden ist, dass die Füllmasse (5) durch Druckbeaufschlagung aus dem Materialmagazin (10) in den Extrusionskopf (3) einleitbar ist.

8. Extrusionsvorrichtung (1) nach Anspruch 7, wobei der Extrusionskopf (3) mit einem zweiten Gewinde (11) und das Materialmagazin (10) mit einem komplementär geformten zweiten Gegengewinde (11') ausgebildet ist, so dass der Extrusionskopf (3) auf das Materialmagazin (10) auf- und von dem Materialmagazin (10) abschraubbar ist.

9. Extrusionsvorrichtung (1) nach einem der vorstehenden Ansprüche, weiterhin mit:
einem Roboter (12), welcher dazu ausgebildet ist, den Extrusionskopf (3) entlang der Nut (2) zu bewegen und die Nut (2) dabei mit der Füllmasse (5) durch Extrusion der Füllmasse (5) aus dem Extrusionskopf (3) aufzufüllen.

10. Verfahren (M) zum Auffüllen einer Nut (2) mit einer Füllmasse (5) mittels einer Extrusionsvorrichtung (1) nach einem der Ansprüche 1 bis 9, mit:
Entlangfahren (M1) eines Extrusionskopfs (3) an der Nut (2); und
Extrudieren (M2) der Füllmasse (5) aus dem Extrusionskopf (3) in die Nut (2);
wobei der Extrusionskopf (3) einem Tiefenprofil der Nut (2) folgend in eine Extrusionsrichtung (4) federelastisch einfedert oder ausfedert.

11. Verfahren (M) nach Anspruch 10, wobei das Entlangfahren (M1) des Extrusionskopfs (3) an der Nut (2) von einem Roboter (12) gesteuert wird.

12. Verwendung einer Extrusionsvorrichtung (1) nach einem der Ansprüche 1 bis 9 und/oder eines Verfahrens (M) nach einem der Ansprüche 10 bis 11 zum Auffüllen einer Nut (2) in einer Flügelstruktur (19) und/oder zwischen Flügelstrukturen (19) eines Luft- oder Raumfahrzeugs.

## Claims

1. Extrusion device (1) for filling a groove (2) with a filling compound (5), comprising:
an extrusion head (3), which is formed spring-elastically in an extrusion direction (4) of the extrusion device (1) to spring in and out in the extrusion direction (4), following a depth profile of the groove (2), when the extrusion head (3) moves along the groove (2), wherein the extrusion head (3) has two cylinder elements (6, 6') fitted into one another and slidable with respect to one another, between which a cylinder spring (7) is arranged, wherein the two cylinder elements (6, 6') are formed hollow to allow the filling compound (5) to pass through.

2. Extrusion device (1) according to Claim 1, wherein the extrusion head (3) has a housing (13), from which the two cylinder elements (6, 6') respectively protrude with a connecting end, wherein a first cylinder element (6) of the two cylinder elements (6, 6') is fixedly connected to the housing (13) and a second cylinder element (6') of the two cylinder elements (6, 6') is slidably mounted in the housing (13) in the manner of a piston.

3. Extrusion device (1) according to Claim 1 or 2, wherein the two cylinder elements (6, 6') and/or the housing (13) at least superficially contain polytetrafluoroethylene, PTFE, and/or are coated with PTFE.

4. Extrusion device (1) according to one of the preceding claims, further comprising:
an extrusion die (8), which is formed so as to extrude the filling compound (5) from the extrusion head (3).

5. Extrusion device (1) according to Claim 4, wherein the extrusion die (8) is formed from a plastic.

6. Extrusion device (1) according to Claim 4 or 5, wherein the extrusion head (3) is formed with a first thread (9) and the extrusion die (8) is formed with a complementarily formed first counter thread (9'), so that the extrusion die (8) can be screwed onto the extrusion head (3) and unscrewed from the extrusion head (3).

7. Extrusion device (1) according to one of the preceding claims, further comprising:
a material magazine (10), which is formed for receiving the filling compound (5) and is connected to the extrusion head (3) in such a way that the filling compound (5) can be introduced into the extrusion head (3) from the material magazine (10) by applying pressure.

8. Extrusion device (1) according to Claim 7, wherein the extrusion head (3) is formed with a second thread (11) and the material magazine (10) is formed with a complementarily formed second counter thread (11'), so that the extrusion head (3) can be screwed onto the material magazine (10) and unscrewed from the material magazine (10).

9. Extrusion device (1) according to one of the preceding claims, further comprising:
a robot (12), which is formed so as to move the extrusion head (3) along the groove (2) and thereby fill the groove (2) with the filling compound (5) by extrusion of the filling compound (5) from the extrusion head (3).

10. Method (M) for filling a groove (2) with a filling compound (5) by means of an extrusion device (1) according to one of Claims 1 to 9, comprising:
moving (M1) an extrusion head (3) along the groove (2); and
extruding (M2) the filling compound (5) from the extrusion head (3) into the groove (2);
wherein the extrusion head (3) springs in or out spring-elastically in an extrusion direction (4), following a depth profile of the groove (2).

11. Method (M) according to Claim 10, wherein the moving (M1) of the extrusion head (3) along the groove (2) is controlled by a robot (12).

12. Use of an extrusion device (1) according to one of Claims 1 to 9 and/or of a method (M) according to either of Claims 10 and 11 for filling a groove (2) in a wing structure (19) and/or between wing structures (19) of an aircraft or spacecraft.

## Revendications

1. Dispositif d'extrusion (1) pour le remplissage d'une rainure (2) avec une masse de remplissage (5), comprenant :
une tête d'extrusion (3) qui est réalisée sous forme élastique à ressort dans une direction d'extrusion (4) du dispositif d'extrusion (1) pour se comprimer et se détendre dans la direction d'extrusion (4) en suivant un profil de profondeur de la rainure (2) lors du déplacement le long de la tête d'extrusion (3) sur la rainure (2), la tête d'extrusion (3) présentant deux éléments cylindriques (6, 6') aptes à coulisser l'un par rapport à l'autre, enfichés l'un dans l'autre, entre lesquels est disposé un ressort cylindrique (7), les deux éléments cylindriques (6, 6') étant réalisés sous forme creuse pour permettre le passage de la masse de remplissage (5).

2. Dispositif d'extrusion (1) selon la revendication 1, dans lequel la tête d'extrusion (3) présente un boîtier (13) hors duquel font saillie les deux éléments cylindriques (6, 6') à chaque fois avec une extrémité de connexion, un premier élément cylindrique (6) des deux éléments cylindriques (6, 6') étant connecté fixement au boîtier (13) et un deuxième élément cylindrique (6') des deux éléments cylindriques (6, 6') étant supporté à la manière d'un piston de manière à pouvoir coulisser dans le boîtier (13).

3. Dispositif d'extrusion (1) selon la revendication 1 ou 2, dans lequel les deux éléments cylindriques (6, 6') et/ou le boîtier (13) contiennent au moins sur la surface supérieure du polytétrafluoroéthylène, PTFE, et/ou sont revêtus de PTFE.

4. Dispositif d'extrusion (1) selon l'une quelconque des revendications précédentes, comprenant en outre :
une buse d'extrusion (8) qui est réalisée pour extruder la masse de remplissage (5) hors de la tête d'extrusion (3).

5. Dispositif d'extrusion (1) selon la revendication 4, dans lequel la buse d'extrusion (8) est formée à partir d'un plastique.

6. Dispositif d'extrusion (1) selon la revendication 4 ou 5, dans lequel la tête d'extrusion (3) est réalisée avec un premier filetage (9) et la buse d'extrusion (8) est réalisée avec un premier filetage conjugué (9') de forme complémentaire, de telle sorte que la buse d'extrusion (8) puisse être vissée sur la tête d'extrusion (3) et dévissée de la tête d'extrusion (3).

7. Dispositif d'extrusion (1) selon l'une quelconque des revendications précédentes, comprenant en outre :
un magasin de matériau (10) qui est réalisé pour recevoir la masse de remplissage (5) et qui est connecté à la tête d'extrusion (3) de telle sorte que la masse de remplissage (5) puisse être introduite dans la tête d'extrusion (3) par sollicitation par pression hors du magasin de matériau (10).

8. Dispositif d'extrusion (1) selon la revendication 7, dans lequel la tête d'extrusion (3) est réalisée avec un deuxième filetage (11) et le magasin de matériau (10) est réalisé avec un deuxième filetage conjugué (11') de forme complémentaire de telle sorte que la tête d'extrusion (3) puisse être vissée sur le magasin de matériau (10) et être dévissée du magasin de matériau (10).

9. Dispositif d'extrusion (1) selon l'une quelconque des revendications précédentes, comprenant en outre :
un robot (12) qui est réalisé de manière à déplacer la tête d'extrusion (3) le long de la rainure (2) et à remplir la rainure (2) en l'occurrence avec la masse de remplissage (5) par extrusion de la masse de remplissage (5) hors de la tête d'extrusion (3).

10. Procédé (M) de remplissage d'une rainure (2) avec une masse de remplissage (5) au moyen d'un dispositif d'extrusion (1) selon l'une quelconque des revendications 1 à 9, comprenant :
le déplacement (M1) d'une tête d'extrusion (3) le long de la rainure (2) ; et
l'extrusion (M2) de la masse de remplissage (5) hors de la tête d'extrusion (3) dans la rainure (2) ;
la tête d'extrusion (3) étant comprimée ou détendue de manière élastique à ressort dans une direction d'extrusion (4) en suivant un profil de profondeur de la rainure (2).

11. Procédé (M) selon la revendication 10, dans lequel le déplacement (M1) de la tête d'extrusion (3) le long de la rainure (2) est commandé par un robot (12) .

12. Utilisation d'un dispositif d'extrusion (1) selon l'une quelconque des revendications 1 à 9 et/ou d'un procédé (M) selon l'une quelconque des revendications 10 à 11 pour remplir une rainure (2) dans une structure d'aile (19) et/ou entre des structures d'ailes (19) d'un aéronef ou d'un engin spatial.
